# EUROPÄISCHE PATENTSCHRIFT

(11) **EP 2 016 318 B1**
(45) Veröffentlichungstag und Bekanntmachung des Hinweises auf die Patenterteilung: **07.09.2016**
(21) Anmeldenummer: 07722942.5
(22) Anmeldetag: 26.02.2007
(51) Int. Cl.: F16K 27/00, F16K 37/00

(54) **GEHÄUSEAGGREGATION FÜR ÜBERWACHUNGS-, STEUERUNGS- UND REGELUNGSSYSTEME FÜR EIN PROZESSVENTIL**
CHASSIS AGGREGATION FOR MONITORING-, CONTROL- AND REGULATION SYSTEMS FOR A PROCESS VALVE
STRUCTURE MODULAIRE DE BOITIER POUR DES SYSTEMES DE SURVEILLANCE, DE COMMANDE ET DE REGULATION POUR UNE SOUPAPE DE PROCESSUS

(30) Priorität: 10.05.2006 DE 102006022008
(43) Veröffentlichungstag der Anmeldung: 21.01.2009
(73) Patentinhaber: GEA Tuchenhagen GmbH, 21514 Büchen (DE)
(72) Erfinder: SCHERER, Bettina, 97959 Assamstadt (DE); WENGERT, Holger, 73441 Bopfingen (DE); WIEDENMANN, Willi, 73469 Riesbürg (DE); KRANZPILLER, Johann, 53721 Siegburg (DE); PORATH, Bernd, 23881 Breitenfelde (DE)
(74) Vertreter: Eisenführ Speiser
(86) Internationale Anmeldenummer: PCT/EP2007/001630
(87) Internationale Veröffentlichungsnummer: WO 2007/128360

(56) Entgegenhaltungen:
- WO-A-02/093058
- WO-A1-02/086365
- GB-A- 2 194 648
- US-A- 5 223 822
- US-A- 5 647 396

## Beschreibung

### TECHNISCHES GEBIET

Die Erfindung betrifft ein Prozessventil mit einer Gehäusekonfiguration für Überwachungs-, Steuerungsund Regelungssysteme für ein Prozessventil, insbesondere für ein Sterilventil zur Anwendung im Bereich der Pharmazie, der Biotechnologie und Kosmetik sowie für die Nahrungsmittel- und Getränkeindustrie, das wenigstens eine ein Schließglied tragende Ventilstange und einen druckmittelbeaufschlagten Antrieb für die Ventilstange(n) aufweist, mit der modular strukturierten Gehäuseaggregation, die an der dem Prozessventil abgewandten Seite des Antriebs mit diesem lösbar verbunden und in die eine mit der(den) Ventilstange(n) verbundene Antriebsstange hineingeführt ist, die einen Stellungsmelder aufweist, der mit der Antriebsstange kontaktiert ist und der die aktuelle Stellung der Ventilstange in Bezug auf ein festgelegtes Bezugssystem erfasst und diesbezüglich aktuelle Stellungsmeldungen liefert, die über Mittel zur Speicherung der aktuellen Stellungsmeldungen und über Mittel zur Berechnung und zum Vergleich von Stellungsmeldungen verfügt und die Mittel zur optischen und/oder akustischen Meldung und/oder zum Auslesen des Funktionszustandes des Prozessventils aufweist.

Das Prozessventil kann Dabei als Hubventil, d.h. als Absperrvorrichtung mit Verschlussteilen ausgebildet sein, bei denen wenigstens eine Komponente ihrer Öffnungs- und Schließbewegung senkrecht zu den Abschlussflächen (Ventilsitz) gerichtet ist. Es kann aber auch als translatorisch arbeitender Schieber, d.h. als Absperrvorrichtung mit Verschlussteilen ausgeführt sein, die beim Öffnen und Schließen am Ventilsitz entlanggleiten. Des weiteren kann das Prozessventil auch ein sog. Scheibenventil sein, das einen rotativ arbeitende Schieber aufweist. Da die Bewegungskinematik des Schließgliedes und der mit diesem verbundenen Ventilstange durch den in der Regel druckmittelbeaufschlagten Antrieb generiert wird, richtet sich die Arbeitsweise des in der Gehäuseaggregation angeordneten Stellungsmelders bzw. des Wegaufnehmers letztlich nach der Bewegungskinematik des Antriebs und damit letztlich der Antriebsstange. Bei Hubventilen entspricht die Bewegungskinematik des Schließgliedes bzw. der Schließglieder in der Regel auch der Bewegungskinematik der Antriebsstange. Bei Scheibenventilen wird die rotative Bewegung des Schließgliedes überwiegend durch eine ursächliche translatorische Bewegung der Antriebsstange (Transformation einer Hubbewegung in eine Drehbewegung im Antrieb) erzeugt. Die Erfindung soll aber auch anwendbar sein auf rotative Antriebsbewegungen der Antriebsstange, die durch den Stellungsmelder bzw. Wegaufnehmer in der Gehäuseaggregation erfasst werden.

### STAND DER TECHNIK

Gehäuse für Überwachungs-, Steuerungs- und Regelungssysteme für Prozessventile sind insoweit Stand der Technika, siehe WO 02/086 365 A1 als sie in spezieller Ausführung an den jeweiligen Ventiltyp angepasst sind. Die Überwachungssysteme selbst dienen meist der Stellungsanzeige und/oder der Rückmeldung des Schließgliedes (z.B. Normalsitzventil) bzw. der Schließglieder (z.B. Doppelsitzventil). Die Steuerungssysteme selbst dienen der Positionierung des Schließgliedes/der Schließglieder und die zur Anwendung kommenden Regelungssysteme haben die Aufgabe, das Schließglied mit einer vorgegebenen tolerierbaren Regelabweichung in eine gewünschte Sollstellung zu verbringen und dort einzuregeln.

Die vorstehend bezeichneten Überwachungs-, Steuerungs- und Regelungssysteme, nachfolgend kurz zusammengefasst als Kontrollsysteme bezeichnet, sind in der Regel in sog. Steuerköpfen angeordnet, die auf einer dem Gehäuse des Prozessventils abgewandten Seite des Antriebes angeordnet und befestigt sind. Diese Antriebe werden in der Regel mit pneumatischem Druckmittel beaufschlagt.

Meist werden die vorstehend erwähnten Steuerköpfe den hygienischen Anforderungen, die an das Prozessventil und seine Gehäuseoberfläche selbst gestellt werden, insbesondere wenn es als Sterilventil fungiert, nicht gerecht, sodass die einzelnen Insellösungen mit mehr oder weniger großen hygienischen Probleme behaftet sind. Eine Integration der unterschiedlichen Insellösungen im Rahmen einer Gesamtkonzeption, die, ausgehend von einer Basisversion für Stellungsanzeige und Rückmeldung des Ventils, aufrüstbar ist bis zu einem Positionierungsund Regelungssystem für das Schließglied des in Rede stehenden Prozessventils und die in allen Ausbaustufen den hohen hygienischen Anforderungen auf den vorstehend erwähnten Anwendungsgebieten gerecht wird, ist bislang nicht bekannt.

Es ist Aufgabe der vorliegenden Erfindung, ein einer Prozessventil mit modular strukturierte Gehäusekonfiguration der eingangs beschriebenen Art zu schaffen, die hohen hygienischen Anforderungen gerecht wird und die vielfältig und leicht an die unterschiedlichen Anforderungen und Bedingungen des Prozesses anpassbar ist.

### ZUSAMMENFASSUNG DER ERFINDUNG

Diese Aufgabe wird durch die Merkmale im Anspruch 1 gelöst. Vorteilhafte Ausgestaltungen der Gehäuseaggregation gemäß der Erfindung sind Gegenstand der Unteransprüche.

Dabei besteht ein erster erfinderischer Grundgedanke darin, die jeweilige Gehäuseaggregation über ein rotationssymmetrisches Deckelteil am jeweiligen Antrieb, der in einer bestimmten Ventilbaureihe, beispielsweise Sterilventile unterschiedlicher Nennweite, unterschiedlich groß sein kann, form- und kraftschlüssig zu befestigen. Die Anordnung vereinfacht sich dabei erheblich, wenn für unterschiedlich große Antriebe und damit für alle Nennweiten der Ventilbaureihe ein einheitliches Deckelteil vorgesehen ist, dessen Anschlussabmessung antriebsseitig und auf der Seite der Gehäuseaggregation eine immer gleiche und einzige Größe besitzt. Dabei hat sich eine vorteilhafte Ausführung bewährt, bei der der Deckelteil einerseits mit dem Antrieb und andererseits mit dem benachbarten Gehäuseaufsatz jeweils mittels eines am Deckelteil zentrisch angeordneten Bolzengewindes unmittelbar oder mittelbar verschraubt ist.

Ein zweiter erfinderischer Grundgedanke besteht darin, dass die Gehäuseaggregation wahlweise aus einem vorgegebenen, begrenzten Vorrat von Bauteilen zusammengesetzt sein kann, nämlich aus einem ersten Gehäuseaufsatz, einem zweiten Gehäuseaufsatz erster, zweiter, dritter Art und einer ersten oder zweiten Haube. Mit diesem Vorrat an Bauteilen lassen sich wenigstens vier grundlegende Gehäuseaggregationen bilden. Dies sind eine Basisversion eines in Rede stehenden Kontrollsystems, die beispielsweise die Stellungsanzeige für und die Rückmeldung dieser Stellungsanzeige an der gesamten Prozessanlage beigeordnete zentrale Steuerungssysteme generiert (Gehäuseaggregation I). Eine Gehäuseaggregation II beinhaltet neben den Merkmalen der Basisversion zusätzlich die Funktion der Steuerung des Prozessventils bei Ausgestaltung des Antriebs als sog. Feder/Luft-Antrieb. Eine Gehäuseaggregation III weist die Funktionen der Gehäuseaggregation II auf, allerdings im Zusammenwirken mit einem sog. Luft/Luft-Antrieb. Die Stellungsregelung und/oder Positionierung eines Prozessventils wird mit einer Gehäuseaggregation IV realisiert.

Die vorstehend erwähnten Gehäuseaggregationen werden gemäß einem Vorschlag, jeweils ausgehend von dem Deckelteil und in der genannten Reihenfolge, gebildet aus einer Aneinanderreihung des ersten Gehäuseaufsatzes und einer ersten Haube (erste Gehäuseaggregation I) oder des zweiten Gehäuseaufsatzes erster Art und der ersten Haube (zweite Gehauseaggregation II) oder des zweiten Gehäuseaufsatzes erster Art und des zweiten Gehäuseaufsatzes zweiter Art und der ersten Haube (dritte Gehauseaggregation III) oder des zweiten Gehäuseaufsatzes erster Art und des zweiten Gehäuseaufsatzes dritter Art und der zweiten Haube (vierte Gehauseaggregation IV).

Es ist weiterhin vorgesehen, dass der dem Antrieb benachbarte Gehäuseaufsatz immer einen Stellungsmelder bzw. einen sog. Wegaufnehmer für die Ermittlung der jeweiligen Stellung der Ventilstange des Schließgliedes beinhaltet, wobei dieser Stellungsmelder in dem Gehäuseaufsatz lösbar, formschlüssig und verdrehsicher angeordnet ist.

Ein dritter erfinderischer Grundgedanke besteht in der einfachen Geometrie der Gehäuseaufsätze und der Hauben jeweils in Gestalt als rotationssymmetrische Grundkörper mit zylinderförmiger Außenkontur. Dabei sind die Verbindungsstellen zwischen Deckelteil, Gehäuseaufsatz und Haube der jeweiligen Gehäuseaggregation derart ausgebildet, dass sich, im Meridianschnitt gesehen, die Mantellinien des Deckelteils, der Grundkörper der Gehäuseaufsätze und der Haube durchmessergleich, bündig, lückenlos und spaltfrei aneinander reihen.

Ein vierter erfinderischer Grundgedanke sieht vor, dass sämtliche Verbindungsstellen gegeneinander abgedichtet sind und gemäß einem weiteren erfinderischen Grundgedanken sind an sämtlichen Verbindungsstellen die jeweiligen Verbindungspartner in identischer Weise zueinander zentriert und form- und kraftschlüssig miteinander verbunden.

Gemäß einer vorteilhaften Ausgestaltung ist vorgesehen, dass der jeweilige Gehäuseaufsatz an seinem dem benachbarten Gehäuseaufsatz oder der Haube zugewandten Ende mit Nuten für einen bajonettverschlussähnlichen Verbindungsmechanismus versehen ist, und dass der jeweils korrespondierende Gehäuseaufsatz an seinem anderen Ende und die Haube mit einem in die jeweilige Nut eingreifenden Gegenstück ausgestattet sind. In diesem Zusammenhang wird vorgeschlagen, jeweils zwei diametral angeordnete Nuten mit jeweils einem entsprechenden Gegenstück vorzusehen, wodurch eine hinreichend sichere und zuverlässige Verbindung realisierbar ist. Damit sind die Anschlussbedingungen einheitlich festgelegt, denkbar einfach ausgestaltet und die Bauteile des Baukastensystems sind im Rahmen der vorgesehenen Gehäuseaggregation problemlos gegeneinander austauschbar.

Während die Verbindungsstellen der einzelnen Gehäuseaufsätze und der Hauben in vorteilhafter Weise beispielsweise durch den bajonettverschlussähnlichen Verbindungsmechanismus determiniert sind, soweit es die Art der Verbindung und auch eine definierte gegenseitige Positionierung und Zentrierung der einzelnen miteinander verbundenen Verbindungspartner betrifft, ist gemäß einem weiteren Vorschlag die Verbindung zwischen dem Deckelteil und dem benachbarten Gehäuseaufsatz derart ausgestaltet, dass das in den Gehäuseaufsatz eingreifende Bolzengewinde des Deckelteils mit einem Halterungsring verschraubt ist, der im Gehäuseaufsatz lösbar und formschlüssig und zum einen axial unverschieblich und zum anderen in Umfangsrichtung zwischen zwei am Gehäuseaufsatz vorgesehenen Endanschlägen im Bereich eines dadurch festgelegten gesamten Verdrehwinkels drehbar angeordnet ist. Gemäß einer vorteilhaften Ausführungsform umfasst dabei die Verdrehbarkeit des Deckelteils in Verbindung mit dem Halterungsring gegenüber dem Gehäuseaufsatz zwischen den Endanschlägen den gesamten Verdrehwinkel von bis zu 350 Grad.

Um eine sehr feinstufige Stellungsjustierung (Arretierung) der Gehäuseaggregation mit den an diese angeschlossenen elektrischen und ggf. pneumatischen Leitungen in Bezug zum Antrieb, der mit dem Gehäuse des Prozessventils in der Regel verdrehfest und in einer festgelegten Zuordnung verbunden ist, zu ermöglichen, ist weiterhin vorgesehen, dass der gesamte Verdrehwinkel in Winkelschritten von 5 bis 10 Grad, bevorzugt 6 Grad, unterteilt ist, und dass die jeweiligen Winkelschritte durch eine im Gehäuseaufsatz über dessen gesamten Innenumfang sich erstreckende entsprechende Verzahnung bzw. Rasterung bewirkt wird, mit der ein am Halterungsring angeordneter Eingreifer federnd zusammenwirkt.

Für den Fall, dass die Ansteuerung des jeweiligen Antriebs des Prozessventils über ein Pilotventil erfolgt, das im Bereich des jeweiligen Antriebs und nicht etwa an zentraler Stelle in einer Prozessanlage angeordnet ist, ist vorgesehen, dass der zweite Gehäuseaufsatz Mittel zur Steuerung des Druckmittels für den Antrieb aufweist. Handelt es sich dabei um jenen Gehäuseaufsatz, der dem Antrieb unmittelbar benachbart ist, um den sog. zweiten Gehäuseaufsatz erster Art, dann beinhaltet dieser auch immer den Stellungsmelder. Damit substituiert dieser Gehäuseaufsatz dann den ersten Gehäuseaufsatz in der Gehäuseaggregation I, wobei einerseits die Verbindung mit dem Deckelteil identisch ausgeführt ist und auch die Verbindungsstelle auf der anderen Seite, entweder mit einem weiteren Gehäuseaufsatz oder der Haube, gleichfalls die weiter oben beschriebene Ausführung beinhaltet.

Während einfachwirkende Antriebe, unabhängig davon, ob sie mit der ihnen innewohnenden Rückstellfeder federschließend oder federöffnend arbeiten, mit einem einzigen Pilotventil im dem Antrieb benachbarten zweiten Gehäuseaufsatz auskommen und derartige Antriebe überwiegend in Anlagen der Prozesstechnik zum Einsatz kommen, gibt es spezielle Anwendungen, in denen sog. doppeltwirkende Antriebe ohne Rückstellfeder Verwendung finden. Dabei wird der Kolben im Antrieb wechselseitig von beiden Seiten mit Druckmittel, vorzugsweise Druckluft, beaufschlagt. Hierzu sind zwei Pilotventile erforderlich, wobei in der in diesem Falle in Frage kommenden Gehäuseaggregation II ein erstes Pilotventil im zweiten Gehäuseaufsatz erster Art und ein zweites Pilotventil im zweiten Gehäuseaufsatz zweiter Art angeordnet sind.

Die vorstehend beschriebene Gehäuseaggregation IV nimmt ein Kontrollsystem auf, das die Positionierung oder die Regelung des Schließgliedes des Prozessventils ermöglicht. Der Stellungsmelder zur Erfassung der jeweiligen Stellung des Prozessventils ist im zweiten Gehäuseaufsatz erster Art angeordnet. Mit jeweils einem Pilotventil im zweiten Gehäuseaufsatz erster Art und im zweiten Gehäuseaufsatz dritter Art werden der jeweilige Sollwert der Stellung des Prozessventils angesteuert bzw. ausgeregelt.

Den Abschluss der vorstehend beschriebenen Gehäuseaggregationen I bis IV bildet jeweils eine erste bzw. zweite Haube, die an ihrer Verbindungsstelle mit dem ersten Gehäuseaufsatz bzw. dem zweiten Gehäuseaufsatz erster bis dritter Art jeweils kompatibel ist. Diese Haube weist gemäß einer vorteilhaften Ausführungsform im Zentrum ihrer in die Umgebung weisenden Oberseite eine transparente Leuchtkuppel auf, die wenigstens drei farblich unterschiedliche LED-Signalgeber zur Anzeige der Funktionszustände des Prozessventils abdeckt.

Es wird weiterhin vorgeschlagen, dass die Haube eine Platine zur Aufnahme der gesamten Steuerelektronik für die Überwachung oder Steuerung oder Regelung des Prozessventils aufnimmt. Dabei ist die Platine mit der Steuerelektronik für die Überwachung oder die Steuerung in der ersten Haube untergebracht, während die zweite Haube ausschließlich für die Aufnahme der Steuerelektronik für die Regelung dient.

Die Steuerelektronik stellt, wie dies ein weiterer Vorschlag vorsieht, die Rückmeldungen für die Offen- und die Schließstellung des Prozessventils entweder als 24 V DC Schaltausgang oder als AS-Interface Datenbit zur Verfügung.

Zu tolerierende Veränderungen im Prozess oder in der Umgebung des Prozessventils haben Einfluss auf die aktuelle Stellung des Prozessventils im Vergleich zu diesbezüglichen bereits gespeicherten Stellungen des Ventils in der Vergangenheit unter anderen Prozess- und/oder Umgebungsbedingungen. Um in solchen Fällen, in denen das Prozessventil in jedem Falle nach wie vor ordnungsgemäß schließt oder öffnet, die elektrische und optische Rückmeldung bei rechnerischen Positionsabweichungen zu gewährleisten, sieht ein weiterer Vorschlag vor, dass in der Steuerelektronik für die Rückmeldung der Offen- und der Schließstellung des Prozessventils eine wahlweise abrufbare Schaltpunkttoleranz von 0,3 oder 0,5 oder 0,8 mm hinterlegt ist.

Eine flexible steuerungstechnische Handhabung der erfindungsgemäßen Gehäuseaggregation wird dadurch erreicht, dass die Haube zwei Bedientasten zur manuellen Programmierung und einen Programmiereingang für eine rechnergestützte Programmierung des Überwachungs-, Steuerungs- und Regelungssystems für das Prozessventil aufweist. Über die beiden Bedientasten kann eine automatische Endlagen-Programmierung oder eine manuelle Bedienung des Prozessventils durchgeführt werden. Eine Endlagen-Programmierung des Prozessventils ist darüber hinaus auch über den Programmiereingang von einer externen (speicherprogrammierbaren) Steuerung aus möglich.

Eine einfache Beschaltung und Verkabelung der erfindungsgemäßen Gehäuseaggregation mit elektrischen und pneumatischen Leitungen wird dadurch erreicht, dass die elektrischen und die pneumatischen Anschlüsse an den Gehäuseaufsätzen jeweils als Steckanschluss (Steckdose) ausgebildet sind.

Zusammenfassend kann festgehalten werden, dass die vorstehend beschriebenen Gehäuseaggregationen für alle Varianten des Kontrollsystems aus zwei generell unterschiedlichen Gehäuseaufsätzen in Verbindung mit einer Haube in zwei unterschiedlichen Ausführungsformen besteht, wobei sich die zweiten Gehäuseaufsätze erster bis dritter Art lediglich in der Beschaltung ihrer elektrischen und pneumatischen Anschlüsse und in der Bestückung mit einem Pilotventil unterscheiden. Sämtliche Gehäuseaufsätze und die jeweilige Haube sind über identische Verbindungsstellen (Schnittstellen) miteinander zu verbinden. Die Gehäuseaggregationen sind entsprechend den Anforderungen mit unterschiedlichen Platinen zur Aufnahme der erforderlichen Steuerelektronik, angeordnet jeweils in der zugeordneten Haube, und ggf. mit dem in Frage kommenden Pilotventil auszurüsten, ohne dass hier im Verlauf der Ausrüstung zusätzliche Anpassungsmaßnahmen erforderlich sind. Die erfindungsgemäßen Gehäuseaggregationen ordnen sich einer einheitlichen Bedienphilosophie für die unterschiedlichen Funktionen unter, wobei diese Bedienphilosophie benutzerfreundlich ausgestaltet ist. Die Geometrie der Gehäuseaufsätze ist einerseits kompakt und an die gleichfalls teilweise sehr kleinteilig bauenden Prozessventile angepasst, und sie ist hinsichtlich ihrer Oberflächengestalt hygienisch ausgeführt und entspricht insoweit der Ausgestaltung und den Anforderungen an das jeweilige Ventilgehäuse des Prozessventils.

### KURZBESCHREIBUNG DER ZEICHNUNGEN

Ausführungsbeispiele der Erfindung sind in den Figuren der Zeichnung dargestellt und werden nachfolgend beschrieben. Es zeigen
- **Figur 1**: die Struktur der erfindungsgemäßen Gehäuseaggregationen in den präferierten Ausbaustufen, wobei das Prozessventil, der Antrieb, vier Gehäuseaufsätze sowie die beiden Ausführungsformen der Haube jeweils perspektivisch dargestellt sind;
- **Figuren 2a-2i**: den ersten Gehäuseaufsatz in unterschiedlichen Ansichten, Schnittdarstellungen und Perspektiven und
- **Figuren 3a-3h**: den zweiten Gehäuseaufsatz erster bis dritter Art in unterschiedlichen Ansichten, Schnittdarstellungen und Perspektiven.

### DETAILLIERTE BESCHREIBUNG

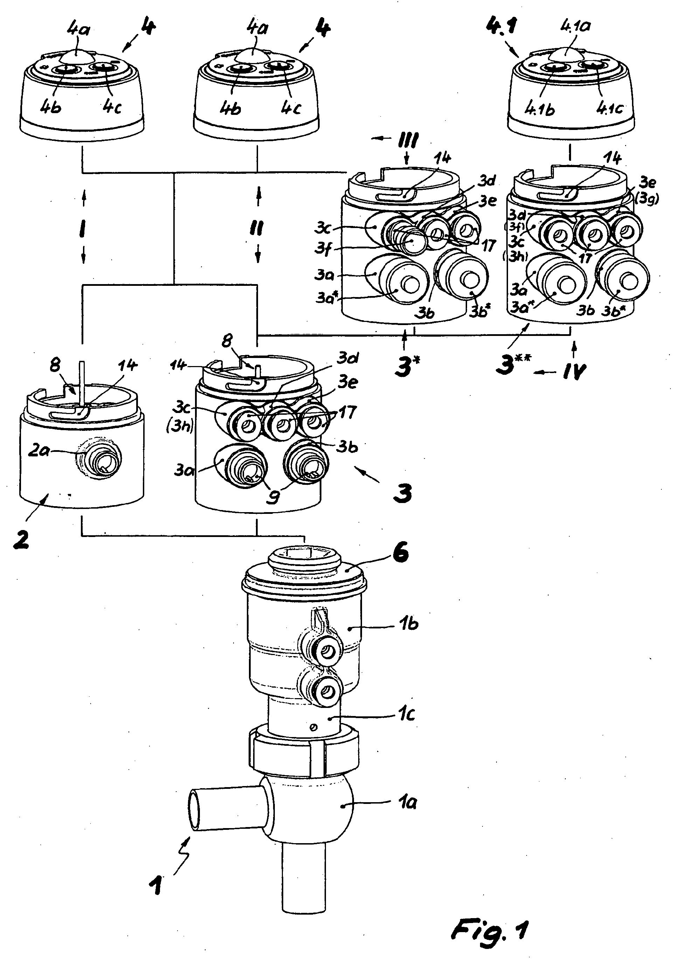

Ein Prozessventil 1 **(****Figur 1****)** besteht im Wesentlichen aus einem Ventilgehäu se 1 a und einem Antrieb 1 b, der in der Regel mit pneumatischem Druckmittel beaufschlagt wird und der entweder federschließend oder federöffnend oder doppeltwirkend ausgestaltet sein kann, wobei im letzten Falle zwei nicht bezeichnete Anschlüsse vorzusehen sind. Das Ventilgehäuse 1 a und der Antrieb 1 b sind über eine Laterne 1 c und eine nicht bezeichnete Schraubverbindung miteinander verbunden. Der Antrieb 1 b besitzt auf seiner dem Ventilgehäuse 1 a abgewandten Seite einen Deckelteil 6, der zur Verbindung mit einem ersten Gehäuseaufsatz 2 oder einem zweiten Gehäuseaufsatz erster Art 3 mittels einer speziell ausgestalteten, hinsichtlich Form und Abmessung einheitlichen Verbindungsstelle ausgestaltet ist. Der Antrieb 1 b kann somit entweder mit dem ersten Gehäuseaufsatz 2 oder mit dem zweiten Gehäuseaufsatz erste Art 3 verbunden werden. Im ersten Falle (Gehäuseaggregation I) und im zweiten Falle (Gehäuseaggregation II) bildet jeweils eine erste Haube 4 den endseitigen Abschluss der Anordnung, wobei in der ersten Haube 4 die gesamte Steuerelektronik für die jeweilige Anwendung angeordnet ist.

Für den Fall, dass der Antrieb 1 b doppeltwirkend ausgestaltet ist, schließt sich an den zweiten Gehäuseaufsatz erster Art 3 ein zweiter Gehäuseaufsatz zweiter Art 3* an, bevor die vorstehend genannte erste Haube 4 den endseitigen Abschluss bildet (Gehauseaggregation III).

Ein Stellungsmelder 8 bzw. ein Wegaufnehmer, von dem eine teilweise dargestellte Schaltstange zu sehen ist, ist in jedem Gehäuseaufsatz 2 bzw. 3 vorgesehen. Bei der Gehäuseaggregation III beinhaltet lediglich der zweite Gehäuseaufsatz erster Art 3 einen diesbezüglichen Stellungsmelder 8.

Der erste Gehäuseaufsatz 2 besitzt einen Steckeranschluss 2a, während der zweite Gehäuseaufsatz erster Art 3 und zweiter Art 3* jeweils einen ersten und einen zweiten Steckeranschluss 3a, 3b für elektrische Leitungen aufweisen und darüber hinaus über einen ersten Luftanschluss 3c, einen zweiten Luftanschluss 3d und einen dritten Luftanschluss 3e verfügen. Bezogen auf die Darstellungslage ist am jeweils oberen Ende der Gehäuseaufsätze 2, 3, 3* eine form- und kraftschlüssige Gehäuseverbindung 14 in Form eines bajonettverschlussähnlichen Verbindungsmechanismusses erkennbar. Die zweiten Gehäuseaufsätze erster und zweiter Art 3, 3* sind hinsichtlich ihrer generellen räumlichen Geometrie und der Konfiguration der elektrischen und pneumatischen Anschlüsse 3a, 3b bzw. 3c bis 3e identisch. Die Unterschiede sind in der Beschaltung der elektrischen und pneumatischen Anschlüsse sowie in der Art eines jeweils nicht dargestellten Pilotventils begründet. Bei der Gehäuseaggregation III sind die Steckeranschlüsse 3a und 3b des Gehäuseaufsatzes 3* mit Blindkappen 3a* bzw. 3b* verschlossen, und im ersten Luftanschluss 3c des Gehäuseaufsatzes 3* ist ein Schalldämpfer 3f eingesetzt.

Für den Fall, dass die erfindungsgemäße Gehäuseaggregation mit einer Positionier- oder Regeleinrichtung für das Schließglied des Prozessventils auszurüsten ist (Gehäuseaggregation IV), wird dem zweiten Gehäuseaufsatz erster Art 3 ein zweiter Gehäuseaufsatz dritter Art 3** in Reihe geschaltet, wobei letzterer endseitig in einer zweiten Haube 4.1 seinen Abschluss findet, auf deren Platine auch die Elektronikbaugruppen des Reglers angeordnet sind. Die Gehäuseaufsätze erster und dritter Art 3, 3** sind hinsichtlich ihrer generellen räumlichen Geometrie und der Konfiguration der elektrischen und pneumatischen Anschlüsse 3a, 3b bzw. 3c bis 3e identisch. Die Unterschiede sind in der Beschaltung der elektrischen und pneumatischen Anschlüsse sowie in der Art eines jeweils nicht dargestellten Pilotventils begründet.

Die erste Haube 4 und auch die zweite Haube 4.1 sind jeweils mit einer Leuchtkuppel 4a bzw. 4.1 a versehen. In der ersten Haube 4 sind drei farblich unterschiedliche, nicht dargestellte und bezeichnete LED-Signalgeber (Leuchtdioden (LEDs)) angeordnet, wobei eine gelbe LED die "AUF-Stellung", eine grüne LED die "ZU-Stellung" anzeigt und eine rote LED auf einen "Fehler/eine Störung" hinweist. Neben diesem optischen Signalgeber verfügt die erste Haube 4 über zwei extern zu bedienende Bedientasten 4b und 4c.

Die zweite Haube 4.1 ist insoweit gegenüber der vorstehend beschriebenen ersten Haube 4 modifiziert, als nunmehr hier in der Leuchtkuppel 4.1 a ein weiterer LED-Signalgeber (blaue LED) vorgesehen ist, wobei diese blaue LED den "ausgeregelten Zustand" signalisiert und blinkend den "nicht ausgeregelten Zustand" anzeigt. Über die beiden extern zu bedienenden Bedientasten 4.1b und 4.1 c sind Funktionen zur Programmierung der Positioniervorrichtung bzw. des Reglers aktivierbar.

Während der erste Gehäuseaufsatz 2 standardmäßig mit dem einzigen Steckeranschluss 2a zur Übertragung der jeweils binär codierten Informationen an eine externe speicherprogrammierbare Steuerung versehen ist, besitzt der zweite Gehäuseaufsatz erster Art 3 standardmäßig die beiden Steckeranschlüsse 3a, 3b. Der erste Steckeranschluss 3a, der identisch ist mit dem Steckeranschluss 2a am ersten Gehäuseaufsatz 2, ist fünfpolig, wobei "L+ 24 VDC" am sog. Pin 1 liegt, an Pin 2 die "Rückmeldung AUF" aufgelegt ist, "L- 24 VDC" an Pin 3 angeschlossen ist, an Pin 4 die "Rückmeldung ZU" anliegt und Pin 5 für den "Programmiereingang" vorgesehen ist. Der zweite Steckeranschluss 3b ist gleichfalls fünfpolig, wobei Pin 1 für die "Aktivierung des Pilotventils" vorgesehen ist, Pin 2 für die "Aktivierung eines weiteren Pilotventils" in einem ggf. in Reihe geschalteten zweiten Gehäuseaufsatz zweiter Art 3* bestimmt ist, Pin 3 und Pin 4 für "weitere Optionen" reserviert sind und schließlich Pin 5 der "Fehlermeldung" dient.

Der zweite Gehäuseaufsatz dritter Art 3**, der zu dem im zweiten Gehäuseaufsatz erster Art 3 angeordneten ersten Pilotventil ein zur Ausregelung bestimmtes zweites Pilotventil beinhaltet, verfügt über den ersten Steckeranschluss 3a und den zweiten Steckeranschluss 3b, die, wenn eine Kombination mit dem zweiten Gehäuseaufsatz erster Art 3 vorgesehen ist, mit Blindkappen 3a*, 3b* verschlossen und deren Funktion von dem ersten Steckeranschluss 3a und dem zweiten Steckeranschluss 3b am zweiten Gehäuseaufsatz erster Art 3 übernommen werden, sowie über den ersten Luftanschluss 3c, den zweiten Luftanschluss 3d und den dritten Luftanschluss 3e. Die den beiden Pilotventilen jeweils zugeordneten drei Luftanschlüsse 3c, 3d, 3e werden in der notwendigen Weise extern von außen beschattet bzw. miteinander verbunden (Schlauchverbindung 3h zwischen den Luftanschlüssen 3c; Schalldämpfer 3f an Luftanschluss 3d und Blindstopfen 3g in Luftanschluss 3e jeweils von Gehäuseaufsatz 3**).

Der fünfpolige erste Steckeranschluss 3a am zweiten Gehäuseaufsatz dritter Art 3** ist hinsichtlich der Belegung seiner Pins gegenüber dem ersten Steckeranschluss 3a an Gehäuseaufsatz 3 dahingehend abgewandelt, dass nunmehr an Pin 2 der "Sollwerteingang +" und an Pin 4 der "Istwertausgang +" angelegt sind. Die Pin-Belegung am zweiten Stecker 3b ist gegenüber der vorstehend beschriebenen Belegung dahingehend verändert, dass Pin 1 nunmehr "frei" bleibt, an Pin 2 die "Rückmeldung AUF" angelegt ist, an Pin 3 "L- 24 VDC" (Bezugspotenzial) anliegt und an Pin 4 die "Rückmeldung ZU" aufgelegt ist.

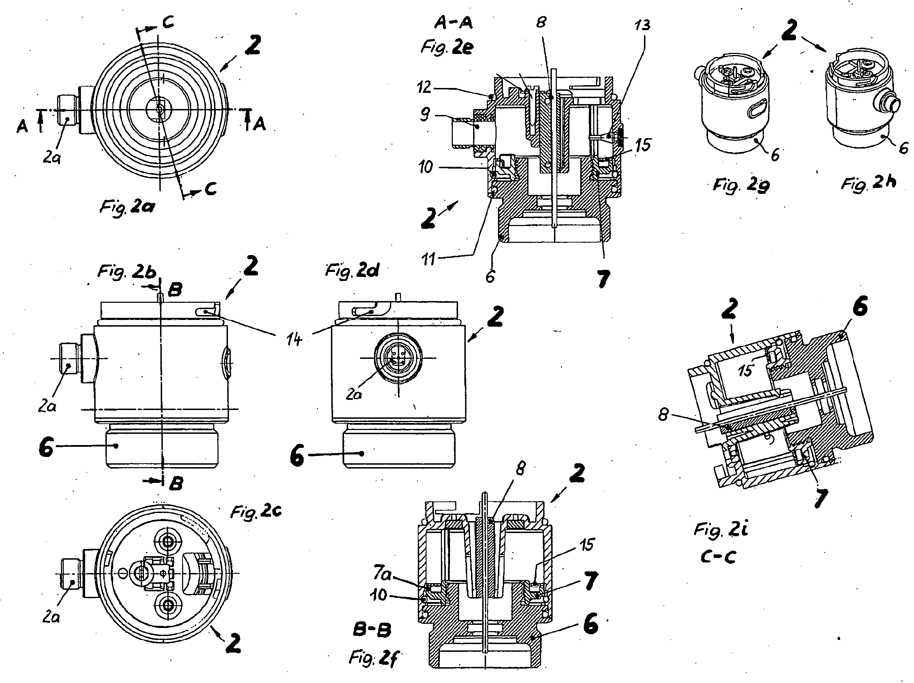

Wesentliche Gestaltungsmerkmale des erfindungsgemäßen Gehäuseaufsatzes 2 werden anhand der **Figuren 2a** bis **2i** beschrieben. Dabei sind die Schnittverläufe der Mittelschnitte der **Figuren 2e** **(A-A)**, **2i (C-C)** und **2f (B-B)** in den **Figuren 2a** bzw. **2b** gekennzeichnet.

Der Mittelschnitt durch den ersten Gehäuseaufsatz 2 **(****Figur 2f****)** entsprechend dem in der Vorderansicht gemäß **Figur 2b** mit **B-B** gekennzeichneten Schnittverlauf zeigt, bezogen auf die Darstellungslage, am unteren Ende den Deckelteil 6, der untenseits mit dem nicht dargestellten Antrieb 1b und obenseits über einen Halterungsring 7 mit dem ersten Gehäuseaufsatz 2 verbunden ist. Die Verbindung zwischen Deckelteil 6 und Antrieb 1 b erfolgt vorzugsweise über ein am Deckelteil 6 zentrisch angeordnetes Bolzengewinde, während die Verbindung andererseits zwischen Halterungsring 7 und dem ersten Gehäuseaufsatz 2 über einen im letzteren festgelegten Sicherungsring 10 sichergestellt ist. Dadurch ist der Halterungsring 7 im ersten Gehäuseaufsatz 2 lösbar und formschlüssig und zum einen axial unverschieblich und zum anderen in Umfangsrichtung zwischen zwei am ersten Gehäuseaufsatz 2 vorgesehenen Endanschlägen im Bereich eines dadurch festgelegten gesamten Verdrehwinkels drehbar angeordnet. Die Verdrehbarkeit des Deckelteils 6 in Verbindung mit dem Halterungsring 7 gegenüber dem ersten Gehäuseaufsatz 2 umfasst zwischen den vorg. Endanschlägen den gesamte Verdrehwinkel, der bis zu 350 Grad betragen kann.

Am Halterungsring 7 ist ein elastisch federnder Eingreifer 7a ausgebildet, dessen Nase mit einer Verzahnung bzw. Rasterung 15 form- und kraftschlüssig zusammenwirkt, wobei sich letztere über den gesamten Innenumfang des ersten Gehäuseaufsatzes 2 in einer zu dessen Längsachse senkrechten Ebene erstreckt. Diese federnde form- und kraftschlüssige Verbindung dient zum einen der diskreten gegenseitigen Festlegung der verbundenen Teile, des Halterungsringes 7 und des ersten Gehäuseaufsatzes 2, über den gesamten Verdrehwinkel von bis zu 350 Grad hinweg, und zwar in relativ kleinen, durch die Teilung der Verzahnung festgelegten Winkelschritten, und zum andern der unverrückbaren Justierung dieser jeweils gewählten Lage, falls ein an dem ersten Gehäuseansatz 2 angreifendes Drehmoment unter einem bestimmten voreinstellbaren Grenzwert bleibt. Die Verzahnung 15 wird zweckmäßig so gewählt, dass der gesamte Verdrehwinkel in Winkelschritte von 5 bis 10 Grad, bevorzugt 6 Grad, unterteilt ist. Eine diesbezügliche Drehbarkeit zwischen Halterungsring 7 und dem erstem Gehäuseaufsatz 2 ist von Vorteil und wünschenswert, da dadurch der Steckeranschluss 2a am ersten Gehäuseaufsatz 2 den gegebenen Zuführbedingungen der elektrischen Leitungen leicht anpassbar ist.

Die **Figuren 2e, 2f** und **2i** zeigen jeweils u.a. den Stellungsmelder bzw. Wegaufnehmer 8, der konzentrisch zur Längsachse des ersten Gehäuseaufsatzes 2 angeordnet und in diesem lösbar, formschlüssig und verdrehsicher befestigt ist. Eine abgedichtete Verbindung zwischen dem Deckelteil 6 und dem ersten Gehäuseaufsatz 2 einerseits wird über einen ersten O-Ring 11 **(****Figur 2e****)** und eine entsprechende Verbindung zwischen dem ersten Gehäuseaufsatz 2 und der ersten Haube 4 andererseits wird über einen zweiten O-Ring 12 sichergestellt. Der als ein sog. Flanschstecker 9 ausgebildete Steckeranschluss 2a ist in den **Figuren 2a** bis **2d** und in den perspektivischen Darstellungen der **Figuren 2g** und **2h** ersichtlich. Die Schnittdarstellung gemäß **Figur 2e** entsprechend dem in **Figur 2a** mit **A-A** gekennzeichneten Schnittverlauf zeigt weiterhin einen Entlüftungsstopfen 13.

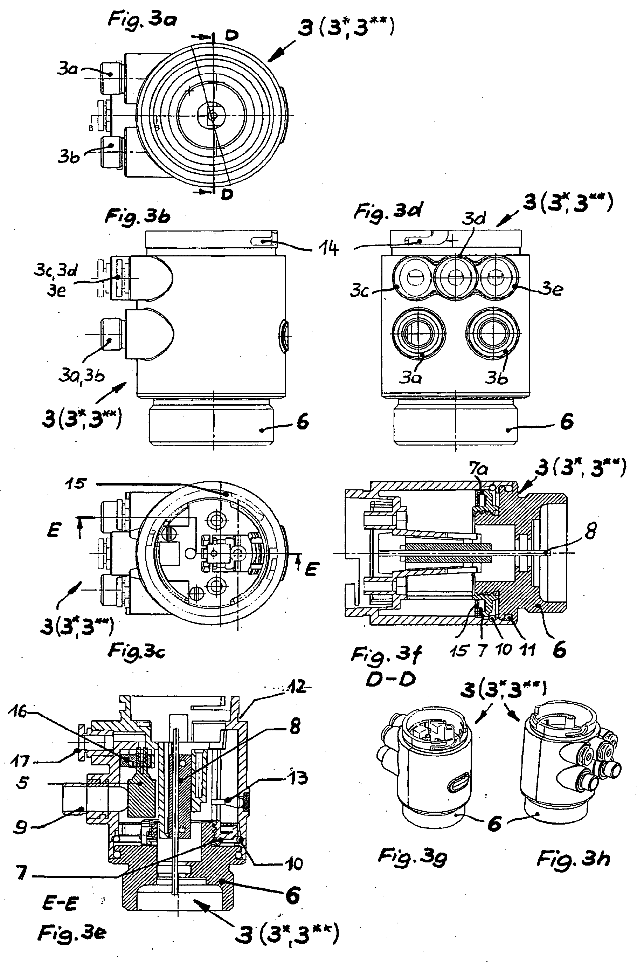

Wesentliche Gestaltungsmerkmale des erfindungsgemäßen zweiten Gehäuseaufsatzes erster bis dritter Art 3, 3*, 3** werden anhand der **Figuren 3a** bis **3h** beschrieben. Dabei sind die Schnittverläufe der Mittelschnitte der Figuren **3e** **(E-E)** und **3f (D-D)** in den **Figuren 3a** bzw. **3c** gekennzeichnet. Es werden nachfolgend nur die wesentlichen Unterschiede gegenüber dem ersten Gehäuseaufsatz 2 gemäß den Figuren 2a bis 2i beschrieben.

Der zweite Gehäuseaufsatz 3, 3*, 3** weist eine gegenüber dem ersten Gehäuseaufsatz 2 größere axiale Erstreckung auf, da über den beiden Steckeranschlüssen 3a, 3b, in einer zur Längsachse des Gehäuseaufsatzes 3, 3*, 3** senkrechten Ebene, am Umfang zusätzlich die drei Luftanschlüsse 3c, 3d, 3e (s. **Figur 3d**) und im Innenraum ein Pilotventil 5 in Verbindung mit einem Pneumatikblock 16 anzuordnen sind. Der Pneumatikblock 16 stellt die fluidgängige Verbindung zwischen den externen Luftanschlüssen 3c, 3d, 3e und den entsprechenden Anschlüssen am Pilotventil 5 her. Die Luftanschlüsse 3c, 3d, 3e sind mit Einpress-Steckverbindungen 17 versehen (s. **Figur 3e**).

### BEZUGSZEICHENLISTE DER VERWENDETEN ABKÜRZUNGEN

- 1: Prozessventil
- 1a: Ventilgehäuse
- 1b: druckmittelbeaufschlagter (pneumatischer) Antrieb (federschließend oder federöffnend oder doppelt wirkend ohne Rückstellfeder)
- 1c: Laterne

- 2: erster Gehäuseaufsatz
- 2a: Steckeranschluss

- 3: zweiter Gehäuseaufsatz erster Art
- 3*: zweiter Gehäuseaufsatz zweiter Art
- 3**: zweiter Gehäuseaufsatz dritter Art

- 3a: erster Steckeranschluss
- 3a*: erste Blindkappe

- 3b: zweiter Steckeranschluss
- 3b*: zweite Blindkappe

- 3c: erster Luftanschluss
- 3d: zweiter Luftanschluss
- 3e: dritter Luftanschluss

- 3f: Schalldämpfer
- 3g: Blindstopfen
- 3h: Schlauchverbindung

- 4: erste Haube
- 4a: Leuchtkuppel
- 4b: erste Bedientaste
- 4c: zweite Bedientaste
- 4.1: zweite Haube
- 4.1a: Leuchtkuppel
- 4.1b: erste Bedientaste
- 4.1c: zweite Bedientaste

- 5: Pilotventil
- 6: Deckelteil (Antrieb)

- 7: Halterungsring
- 7a: Eingreifer (federnd)

- 8: Stellungsmelder (Wegaufnehmer)
- 9: Flanschstecker
- 10: Sicherungsring
- 11: erster O-Ring
- 12: zweiter O-Ring
- 13: Entlüftungsstopfen
- 14: form- und kraftschlüssige Gehäuseverbindung (bajonettverschlussähnlicher Verbindungsmechanismus)
- 15: Verzahnung/Rasterung (Stellungsjustierung in vorgegebenen Winkelschritten)
- 16: Pneumatikblock
- 17: Einpress-Steckverbindung

- I: erste Gehäuseaggregation (Anordnung für Stellungsanzeige)
- II: zweite Gehäuseaggregation (Anordnung für Steuerung (Feder/Luft-Antrieb))
- III: dritte Gehäuseaggregation (Anordnung für Steuerung (Luft/Luft-Antrieb))
- IV: vierte Gehäuseaggregation (Anordnung für Positionierung und/oder Stellungsregelung)

## Patentansprüche

1. Prozessventil mit einer (1) Gehäuseaggregation für Überwachungs-, Steuerungs- und Regelungssysteme für ein Prozessventil, das wenigstens eine ein Schließglied tragende Ventilstange und einen druckmittelbeaufschlagten Antrieb (1b) für die Ventilstange(n) aufweist,
mit der modular strukturierten Gehäuseaggregation (I, II, III, IV),
• die an der dem Prozessventil (1) abgewandten Seite des Antriebs (1 b) mit diesem lösbar verbunden und in die eine mit der(den) Ventilstange(n) verbundene Antriebsstange hineingeführt ist,
• die einen Stellungsmelder (8) aufweist, der mit der Antriebsstange kontaktiert ist und der die aktuelle Stellung der Ventilstange in Bezug auf ein festgelegtes Bezugssystem erfasst und diesbezüglich aktuelle Stellungsmeldungen liefert,
• die über Mittel zur Speicherung der aktuellen Stellungsmeldungen und über Mittel zur Berechnung und zum Vergleich von Stellungsmeldungen verfügt und
• die Mittel zur optischen und/oder akustischen Meldung und/oder zum Auslesen des Funktionszustandes des Prozessventils (1) aufweist,
**dadurch gekennzeichnet,**
• **dass** die jeweilige Gehäuseaggregation (I, II, III, IV) über einen rotationssymmetrischen Deckelteil (6) am jeweiligen Antrieb (1b) form- und kraftschlüssig befestigt ist,
• **dass** die Gehäuseaggregation (I, II, III, IV) darüber hinaus wahlweise aus einem ersten Gehäuseaufsatz (2), einem zweiten Gehäuseaufsatz erster, zweiter, dritter Art (3, 3*, 3**) und einer ersten oder zweiten Haube (4, 4.1) zusammengesetzt sein kann,
• **dass** der Gehäuseaufsatz (2, 3, 3*, 3**) und die Haube (4, 4.1) jeweils als rotationssymmetrischer Grundkörper mit zylinderförmiger Außenkontur ausgebildet sind,
• **dass** zwischen Deckelteil (6), Gehäuseaufsatz (2, 3, 3*, 3**) und Haube (4, 4.1) der jeweiligen Gehäuseaggregation (I, II, III, IV) Verbindungsstellen (6/2, 2/4; 6/3, 3/4; 6/3, 3/3*, 3*/4; 6/3, 3/3**, 3**/4.1) ausgebildet sind, an denen sich, im Meridianschnitt gesehen, die Mantellinien des Deckelteils (6), der Grundkörper der Gehäuseaufsätze (2, 3, 3*, 3**) und der Haube (4, 4.1) durchmessergleich, bündig, lückenlos und spaltfrei aneinander reihen,
• **dass** sämtliche Verbindungsstellen gegeneinander abgedichtet sind,
• und **dass** an sämtlichen Verbindungsstellen die jeweiligen Verbindungspartner in identischer Weise zueinander zentriert und form- und kraftschlüssig miteinander verbunden sind.

2. Prozessventil mit einer Gehäuseaggregation nach Anspruch 1,
**dadurch gekennzeichnet,**
**dass** die Gehäuseaggregation (I, II, III, IV), jeweils ausgehend von dem Deckelteil (6) und in der genannten Reihenfolge, aus einer Aneinanderreihung
• des ersten Gehäuseaufsatzes (2) und einer ersten Haube (4) (erste Gehäuseaggregation I) oder
• des zweiten Gehäuseaufsatzes erster Art (3) und der ersten Haube (4) (zweite Gehauseaggregation II) oder
• des zweiten Gehäuseaufsatzes erster Art (3) und des zweiten Gehäuseaufsatzes zweiter Art (3*) und der ersten Haube (4) (dritte Gehauseaggregation III) oder
• des zweiten Gehäuseaufsatzes erster Art (3) und des zweiten Gehäuseaufsatzes dritter Art (3**) und der zweiten Haube (4.1) (vierte Gehauseaggregation IV)
gebildet ist.

3. Prozessventil mit einer Gehäuseaggregation nach Anspruch 1 oder 2,
**dadurch gekennzeichnet,**
**dass** für unterschiedlich große Antriebe (1 b) ein einheitliches Deckelteil (6) vorgesehen ist.

4. Prozessventil mit einer Gehäuseaggregation nach einem der Ansprüche 1 bis 3,
**dadurch gekennzeichnet,**
**dass** der Deckelteil (6) einerseits mit dem Antrieb (1 b) und andererseits mit dem benachbarten Gehäuseaufsatz (2, 3) jeweils mittels eines am Deckelteil (6) zentrisch angeordneten Bolzengewindes unmittelbar oder mittelbar verschraubt ist.

5. Prozessventil mit einer Gehäuseaggregation nach einem der Ansprüche 1 bis 4,
**dadurch gekennzeichnet,**
**dass** der zweite Gehäuseaufsatz (3, 3*, 3**) Mittel zur Steuerung des Druckmittels für den Antrieb (1 b) aufweist.

6. Prozessventil mit einer Gehäuseaggregation nach einem der Ansprüche 1 bis 5,
**dadurch gekennzeichnet,**
**dass** der Gehäuseaufsatz (2, 3, 3*, 3**) an seinem dem benachbarten Gehäuseaufsatz oder der Haube (4, 4.1) zugewandten Ende mit Nuten für einen bajonettverschlussähnlichen Verbindungsmechanismus (14) versehen ist, und dass der jeweils korrespondierende Gehäuseaufsatz (3*, 3**) an seinem anderen Ende und die Haube (4, 4.1) mit einem in die jeweilige Nut eingreifenden Gegenstück ausgestattet sind.

7. Prozessventil mit einer Gehäuseaggregation nach Anspruch 6,
**dadurch gekennzeichnet,**
**dass** jeweils zwei diametral angeordnete Nuten mit jeweils einem entsprechenden Gegenstück vorgesehen sind.

8. Prozessventil mit einer Gehäuseaggregation nach einem der Ansprüche 1 bis 7,
**dadurch gekennzeichnet,**
**dass** das in den Gehäuseaufsatz (2, 3) eingreifende Bolzengewinde des Deckelteils (6) mit einem Halterungsring (7) verschraubt ist, der im Gehäuseaufsatz (2, 3) lösbar und formschlüssig und zum einen axial unverschieblich und zum anderen in Umfangsrichtung zwischen zwei am Gehäuseaufsatz (2, 3) vorgesehenen Endanschlägen im Bereich eines dadurch festgelegten gesamten Verdrehwinkels drehbar angeordnet ist.

9. Prozessventil mit einer Gehäuseaggregation nach Anspruch 8,
**dadurch gekennzeichnet,**
**dass** die Verdrehbarkeit des Deckelteils (6) in Verbindung mit dem Halterungsring (7) gegenüber dem Gehäuseaufsatz (2, 3) zwischen den Endanschlägen den gesamten Verdrehwinkel von bis zu 350 Grad umfasst.

10. Prozessventil mit einer Gehäuseaggregation nach Anspruch 8 oder 9,
**dadurch gekennzeichnet,**
**dass** der gesamte Verdrehwinkel in Winkelschritten von 5 bis 10 Grad, bevorzugt 6 Grad, unterteilt ist, und dass die jeweiligen Winkelschritte durch eine im Gehäuseaufsatz (2, 3) über dessen gesamten Innenumfang sich erstreckende entsprechende Verzahnung (15) bewirkt wird, mit der ein am Halterungsring (7) angeordneter Eingreifer (7a) federnder zusammenwirkt.

11. Prozessventil mit einer Gehäuseaggregation nach einem der Ansprüche 1 bis 10,
**dadurch gekennzeichnet,**
**dass** der Stellungsmelder (8) in dem dem Antrieb (1 b) benachbarten Gehäuseaufsatz (2, 3) lösbar, formschlüssig und verdrehsicher angeordnet ist.

12. Prozessventil mit einer Gehäuseaggregation nach einem der Ansprüche 1 bis 11,
**dadurch gekennzeichnet,**
**dass** die Haube (4, 4.1) im Zentrum ihrer in die Umgebung weisenden Oberseite eine transparente Leuchtkuppel (4a, 4.1 a) aufweist, die wenigstens drei farblich unterschiedliche LED-Signalgeber zur Anzeige der Funktionszustände des Prozessventils (1) abdeckt.

13. Prozessventil mit einer Gehäuseaggregation nach einem der Ansprüche 1 bis 12,
**dadurch gekennzeichnet,**
**dass** die Haube (4, 4.1) eine Platine zur Aufnahme der gesamten Steuerelektronik für die Überwachung oder Steuerung oder Regelung des Prozessventils (1) aufnimmt.

14. Prozessventil mit einer Gehäuseaggregation nach Anspruch 13,
**dadurch gekennzeichnet,**
**dass** die Steuerelektronik die Rückmeldungen für die Offen- und die Schließstellung des Prozessventils (1) entweder als 24 V DC Schaltausgang oder als AS-Interface Datenbit zur Verfügung stellt.

15. Prozessventil mit einer Gehäuseaggregation nach Anspruch 13 oder 14,
**dadurch gekennzeichnet,**
**dass** in der Steuerelektronik für die Rückmeldung der Offen- und der Schließstellung des Prozessventils (1) eine wahlweise abrufbare Schaltpunkttoleranz von 0,3 oder 0,5 oder 0,8 mm hinterlegt ist.

16. Prozessventil mit einer Gehäuseaggregation nach einem der Ansprüche 13 bis 15,
**dadurch gekennzeichnet,**
**dass** die Steuerelektronik in der Haube (4, 4.1) zwei an der Haube (4, 4.1) angeordnete, extern zu bedienende Bedientasten (4b, 4c; 4.1 b, 4.1 c) zur manuellen Programmierung und einen Programmiereingang für eine rechnergestützte Programmierung des Überwachungs-, Steuerungs- und Regelungssystems für das Prozessventil (1) aufweist.

17. Prozessventil mit einer Gehäuseaggregation nach einem der Ansprüche 1 bis 16,
**dadurch gekennzeichnet,**
**dass** elektrische Anschlüsse (2a; 3a, 3b) und pneumatische Anschlüsse (3c, 3d, 3e) an den Gehäuseaufsätzen (2, 3, 3*, 3**) jeweils als Steckanschluss ausgebildet sind.

## Claims

1. A process valve with a housing aggregation for monitoring, open-loop and closed-loop control systems for a process valve, which has at least one valve stem bearing a closing member and a drive (1b) supplied with pressure medium for the valve stem(s),
with the housing aggregation (I, II, III, IV) of modular structure,
• which on the side of the drive (1b) remote from the process valve (1) is detachably connected thereto and into which a drive rod connected to the valve stem(s) is guided,
• which has a position indicator (8) which is contacted with the drive rod and which ascertains the current position of the valve stem in relation to a fixed reference system and delivers current position indications in relation to this,
• which has means for storing the current position indications and means for calculating and for comparing position indications, and
• which has means for optical and/or acoustic notification and/or for reading out the function state of the process valve (1),
**characterised in that**
• the respective housing aggregation (I, II, III, IV) is fastened via a rotationally symmetrical cover part (6) to the respective drive (1b) in positive and non-positive manner,
• the housing aggregation (I, II, III, IV) furthermore can be assembled as desired from a first housing top attachment (2), a second housing top attachment of first, second or third type (3, 3*, 3**) and a first or second hood (4, 4.1),
• the housing top attachment (2, 3, 3*, 3**) and the hood (4, 4.1) are formed in each case as a rotationally symmetrical basic body with a cylindrical outer contour,
• connection points (6/2, 2/4; 6/3, 3/4; 6/3, 3/3*, 3*/4; 6/3, 3/3**, 3**/4.1) between the cover part (6), housing top attachment (2, 3, 3*, 3**) and hood (4, 4.1) of the respective housing aggregation (I, II, III, IV) are formed, on which points, viewed in meridian section, the envelope lines of the cover part (6), of the basic bodies of the housing top attachments (2, 3, 3*, 3**) and of the hood (4, 4.1) are arranged in a row, with identical diameters, in flush manner, contiguously and without gaps,
• all the connection points are sealed off from each other,
• and **in that** the respective connection partners are centred identically relative to each other and are connected to one another in positive and non-positive manner at all the connection points.

2. A process valve with a housing aggregation according to Claim 1,
**characterised in that**
the housing aggregation (I, II, III, IV), in each case starting from the cover part (6) and in the named sequence, is formed from an arrangement in a row
• of the first housing top attachment (2) and a first hood (4) (first housing aggregation I), or
• of the second housing top attachment of first type (3) and the first hood (4) (second housing aggregation II), or
• of the second housing top attachment of first type (3) and the second housing top attachment of second type (3*) and the first hood (4) (third housing aggregation III), or
• of the second housing top attachment of first type (3) and the second housing top attachment of third type (3**) and the second hood (4.1) (fourth housing aggregation IV).

3. A process valve with a housing aggregation according to Claim 1 or 2,
**characterised in that**
a uniform cover part (6) is provided for drives (1b) of different sizes.

4. A process valve with a housing aggregation according to one of Claims 1 to 3,
**characterised in that**
the cover part (6) is directly or indirectly screw-connected on one hand to the drive (1b) and on the other hand to the adjacent housing top attachment (2, 3) in each case by means of a bolt thread arranged centrally on the cover part (6).

5. A process valve with a housing aggregation according to one of Claims 1 to 4,
**characterised in that**
the second housing top attachment (3, 3*, 3**) has means for controlling the pressure medium for the drive (1b).

6. A process valve with a housing aggregation according to one of Claims 1 to 5,
**characterised in that**
the housing top attachment (2, 3, 3*, 3**), on its end facing the adjacent housing top attachment or the hood (4, 4.1), is provided with grooves for a bayonet-lock-like connecting mechanism (14), and **in that** the corresponding housing top attachment (3*, 3**) in each case at its other end and the hood (4, 4.1) are equipped with a counter-part which engages in the respective groove.

7. A process valve with a housing aggregation according to Claim 6,
**characterised in that**
in each case two diametrically arranged grooves are provided with in each case a corresponding counter-part.

8. A process valve with a housing aggregation according to one of Claims 1 to 7,
**characterised in that**
the bolt thread of the cover part (6) which engages in the housing top attachment (2, 3) is screw-connected to a holding ring (7) which is arranged in the housing top attachment (2, 3) detachably and in positive manner and firstly axially undisplaceably and secondly rotatably in the peripheral direction between two end stops provided on the housing top attachment (2, 3) in the range of an entire angle of rotation which is defined thereby.

9. A process valve with a housing aggregation according to Claim 8,
**characterised in that**
the rotation ability of the cover part (6) in conjunction with the holding ring (7) relative to the housing top attachment (2, 3) between the end stops covers the entire angle of rotation of up to 350 degrees.

10. A process valve with a housing aggregation according to Claim 8 or 9,
**characterised in that**
the entire angle of rotation is subdivided into angular increments of 5 to 10 degrees, preferably 6 degrees, and **in that** the respective angular increments is [sic] brought about by corresponding toothing (15) extending in the housing top attachment (2, 3) over the entire inner periphery thereof, with which toothing an engagement means (7a) arranged on the holding ring (7) cooperates in more [sic] resilient manner.

11. A process valve with a housing aggregation according to one of Claims 1 to 10,
**characterised in that**
the position indicator (8) is arranged detachably, in positive manner and in a manner resistant to turning in the housing top attachment (2, 3) adjacent to the drive (1b).

12. A process valve with a housing aggregation according to one of Claims 1 to 11,
**characterised in that**
the hood (4, 4.1) has in the centre of its upper side which points into the surroundings a transparent light dome (4a, 4.1a), which covers at least three differently-coloured LED signal generators for indicating the function states of the process valve (1).

13. A process valve with a housing aggregation according to one of Claims 1 to 12,
**characterised in that**
the hood (4, 4.1) receives a circuit board for receiving the entire control electronics for the monitoring or open-loop or closed-loop control of the process valve (1).

14. A process valve with a housing aggregation according to Claim 13,
**characterised in that**
the control electronics make available the feedback for the open and the closed position of the process valve (1) either as 24 V DC switching output or as an AS interface data bit.

15. A process valve with a housing aggregation according to Claim 13 or 14,
**characterised in that**
a switching point tolerance of 0.3 or 0.5 or 0.8 mm which can be retrieved as desired is stored in the control electronics for the feedback of the open and the closed position of the process valve (1).

16. A process valve with a housing aggregation according to one of Claims 13 to 15,
**characterised in that**
the control electronics in the hood (4, 4.1) have two externally operated operating buttons (4b, 4c; 4.1b, 4.1c) arranged on the hood (4, 4.1) for manual programming and a programming input for computer-assisted programming of the monitoring, open-loop and closed-loop control system for the process valve (1).

17. A process valve with a housing aggregation according to one of Claims 1 to 16,
**characterised in that**
electric connectors (2a; 3a, 3b) and pneumatic connectors (3c, 3d, 3e) on the housing top attachments (2, 3, 3*, 3**) are formed in each case as a plug-in connector.

## Revendications

1. Vanne de processus avec un agrégat de boîtier pour des systèmes de surveillance, de commande et de régulation pour une vanne de processus qui présente au moins une tige de vanne portant un obturateur et un entraînement (1b), soumis à l'action d'un moyen de pression, pour la/les tiges de vanne
avec l'agrégat de boîtier (I, II, III, IV) structuré de façon modulaire,
• qui, sur le côté de l'entraînement (1b) éloigné de la vanne de processus (1), est raccordé de façon détachable à cet entraînement, et dans lequel une tige d'entraînement raccordée à la/aux tige(s) de vanne est introduite,
• qui présente un indicateur de position (8) qui est en contact avec la tige d'entraînement et qui détecte la position actuelle de la tige de vanne par rapport à un système de référence défini et qui fournit des indications de position actuelles à ce sujet,
• qui dispose de moyens d'enregistrement des indications de position actuelles et de moyens de calcul et de comparaison d'indications de position et
• qui présente des moyens d'indication optique et/ou acoustique et des moyens de lecture de l'état de fonctionnement de la vanne de processus (1),
**caractérisée en ce que**
• l'agrégat de boîtier (I, II, III, IV) respectif est fixé sur l'entraînement (1b) respectif par complémentarité de forme et à force par le biais d'une partie de couvercle (6) symétrique en rotation,
• l'agrégat de boîtier (I, II, III, IV) peut en outre être composé au choix d'un premier chapeau de boîtier (2), d'un deuxième chapeau de boîtier de premier, deuxième ou troisième type (3, 3*, 3**) et d'un premier ou deuxième capot (4, 4.1),
• le chapeau de boîtier (2, 3, 3*, 3**) et le capot (4, 4.1) sont respectivement constitués en tant que corps de base symétrique en rotation avec un contour extérieur de forme cylindrique,
• entre la partie de couvercle (6), le chapeau de boîtier (2, 3, 3*, 3**) et le capot (4, 4.1) de l'agrégat de boîtier (I, II, III, IV) respectif, il est constitué des points de raccordement (6/2, 2/4; 6/3, 3/4; 6/3, 3/3*, 3*/4 ; 6/3, 3/3**, 3**/4.1) sur lesquels, en coupe méridienne, les génératrices de la partie de couvercle (6), des corps de base des chapeaux de boîtier (2, 3, 3*, 3**) et du capot (4, 4.1) s'alignent avec le même diamètre, en affleurement, sans lacunes et sans interstice,
• tous les points de raccordement sont rendus étanches les uns par rapport aux autres,
• sur tous les points de raccordement, les partenaires de raccordement respectifs sont centrés les uns par rapport aux autres de façon identique et sont raccordés les uns aux autres par complémentarité de forme et à force.

2. Vanne de processus avec un agrégat de boîtier selon la revendication 1,
**caractérisée en ce que,**
en partant respectivement de la partie de couvercle (6) et dans l'ordre cité, l'agrégat de boîtier (I, II, III, IV) est formé d'une succession
• du premier chapeau de boîtier (2) et d'un premier capot (4) (premier agrégat boîtier I) ou
• du deuxième chapeau de boîtier du premier type (3) et du premier capot (4) (deuxième agrégat de boîtier II) ou
• du deuxième chapeau de boîtier du premier type (3) et du deuxième chapeau de boîtier du deuxième type (3*) et du premier capot (4) (troisième agrégat de boîtier III) ou
• du deuxième chapeau de boîtier du premier type (3) et du deuxième chapeau de boîtier du troisième type (3**) et du deuxième capot (4.1) (quatrième agrégat de boîtier IV).

3. Vanne de processus avec un agrégat boîtier selon la revendication 1 ou 2,
**caractérisée en ce**
**qu'**il est prévu une partie de couvercle (6) uniforme pour des entraînements (1b) de tailles différentes.

4. Vanne de processus avec un agrégat de boîtier selon l'une des revendications 1 à 3,
**caractérisée en ce que**
la partie de couvercle (6) est vissée, directement ou indirectement, d'une part avec l'entraînement (1b) et d'autre part avec le chapeau de boîtier (2, 3) voisin respectivement au moyen d'un filetage de boulon disposé de façon centrée sur la partie de couvercle (6).

5. Vanne de processus avec un agrégat de boîtier selon l'une des revendications 1 à 4,
**caractérisée en ce que**
le deuxième chapeau de boîtier (3, 3*, 3**) présente des moyens de commande du moyen de pression pour l'entraînement (1b).

6. Vanne de processus avec un agrégat de boîtier selon l'une des revendications 1 à 5,
**caractérisée en ce que,**
à son extrémité tournée vers le chapeau de boîtier voisin ou vers le capot (4, 4.1), le chapeau de boîtier (2, 3, 3*, 3**) est muni de rainures pour un mécanisme de raccordement (14) semblable à une fermeture à baïonnette, et **en ce que** le chapeau de boîtier (3*, 3**) respectivement correspondant à son autre extrémité et le capot (4, 4.1) sont équipés d'une pièce antagoniste engrenant dans la rainure correspondante.

7. Vanne de processus avec un agrégat de boîtier selon la revendication 6,
**caractérisée en ce que**
respectivement deux rainures diamétralement opposées sont prévues avec respectivement une pièce antagoniste correspondante.

8. Vanne de processus avec un agrégat de boîtier selon l'une des revendications 1 à 7,
**caractérisée en ce que**
le filetage de boulon de la partie de couvercle (6) engrenant dans le chapeau de boîtier (2, 3) est vissé avec une bague de retenue (7) qui est disposée de façon détachable et par complémentarité de forme dans le chapeau de boîtier (2, 3) et qui est disposée d'une part de façon axialement immobile et d'autre part de façon rotative dans la direction circonférentielle entre deux butées d'extrémité prévues sur le chapeau de boîtier (2, 3) dans la plage d'un angle de rotation total établie par ces butées.

9. Vanne de processus avec un agrégat de boîtier selon la revendication 8,
**caractérisée en ce que**
la possibilité de rotation de la partie de couvercle (6) en liaison avec la bague de retenue (7) par rapport au chapeau de boîtier (2, 3) entre les butées d'extrémité comprend l'angle de rotation total jusqu'à 350 degrés.

10. Vanne de processus avec un agrégat de boîtier selon la revendication 8 ou 9,
**caractérisée en ce que**
l'angle de rotation total est subdivisé en incréments angulaires de 5 à 10 degrés, de préférence de 6 degrés, et **en ce que** les incréments angulaires respectifs sont produits par une denture (15) correspondante qui s'étend dans le chapeau de boîtier (2, 3) sur toute la circonférence intérieure de ce chapeau et avec laquelle un élément d'engrènement (7a) disposé sur la bague de retenue (7) coopère de façon élastique.

11. Vanne de processus avec un agrégat de boîtier selon l'une des revendications 1 à 10,
**caractérisée en ce que**
l'indicateur de position (8) est disposé de façon détachable, par complémentarité de forme et bloqué en rotation, dans le chapeau de boîtier (2, 3) voisin de l'entraînement (1b).

12. Vanne de processus avec un agrégat de boîtier selon l'une des revendications 1 à 11,
**caractérisée en ce que**
le capot (4, 4.1) présente, au centre de son côté supérieur dirigé vers l'environnement, une coupole d'éclairage (4a, 4.1a) qui recouvre au moins trois générateurs de signaux à LED transparents de couleurs différentes pour afficher les états de fonctionnement de la vanne de processus (1).

13. Vanne de processus avec un agrégat de boîtier selon l'une des revendications 1 à 12,
**caractérisée en ce que**
le capot (4, 4.1) loge une platine destinée à loger la totalité de l'électronique de commande pour la surveillance ou la commande ou la régulation de la vanne de processus (1).

14. Vanne de processus avec un agrégat de boîtier selon la revendication 13,
**caractérisée en ce que**
l'électronique de commande met à disposition les retours d'information pour la position ouverte et la position fermée de la vanne de processus (1) soit en tant que sortie de commutation de 24 V CC ou en tant que bit de données d'interface AS.

15. Vanne de processus avec un agrégat de boîtier selon la revendication 13 ou 14,
**caractérisée en ce que,**
dans l'électronique de commande pour le retour d'information de la position ouverte et de la position fermée de la vanne de processus (1), une tolérance du point de commutation de 0,3 ou 0,5 ou 0,8 mm est enregistrée, qui peut être appelée de façon facultative.

16. Vanne de processus avec un agrégat de boîtier selon l'une des revendications 13 à 15,
**caractérisée en ce que**
l'électronique de commande présente dans le capot (4, 4.1) deux touches de manoeuvre (4b, 4c ; 4.1b, 4.1c) de programmation manuelle disposées sur le capot (4, 4.1), à manoeuvrer de façon externe, et une entrée de programmation pour une programmation, assistée par ordinateur, du système de surveillance, de commande et de régulation pour la vanne de processus (1).

17. Vanne de processus avec un agrégat de boîtier selon l'une des revendications 1 à 16,
**caractérisée en ce que**
des connexions électriques (2a ; 3a, 3b) et des connexions pneumatiques (3c, 3d, 3e) sont respectivement constituées en tant que connexion par fiche sur les chapeaux de boîtier (2, 3, 3*, 3**).
